# EUROPÄISCHE PATENTSCHRIFT

(11) **EP 4 401 196 B1**
(45) Veröffentlichungstag und Bekanntmachung des Hinweises auf die Patenterteilung: **20.08.2025**
(21) Anmeldenummer: 23218393.9
(22) Anmeldetag: 20.12.2023
(51) Int. Cl.: H01M 10/613, H01M 10/625, H01M 10/627, H01M 10/6555, H01M 10/6557, H01M 10/6568

(54) **MEHRKANALTEMPERIERVORRICHTUNG, BATTERIEGEHÄUSE SOWIE VERWENDUNG EINER MEHRKANALTEMPERIERVORRICHTUNG**
MULTI-CHANNEL TEMPERING DEVICE, BATTERY HOUSING AND USE OF A MULTI-CHANNEL TEMPERING DEVICE
DISPOSITIF DE RÉGULATION DE TEMPÉRATURE MULTICANAL, BOÎTIER DE BATTERIE ET UTILISATION D'UN DISPOSITIF DE RÉGULATION DE TEMPÉRATURE MULTICANAL

(30) Priorität: 23.12.2022 DE 102022134706
(43) Veröffentlichungstag der Anmeldung: 17.07.2024
(73) Patentinhaber: POLYTEC PLASTICS Germany GmbH & Co. KG, 49393 Lohne (DE)
(72) Erfinder: VAN GILST, Walter, 49393 Lohne (DE); HUCKLE, Jens, 76676 Graben-Neudorf (DE); BURKERT, Tobias, 49393 Lohne (DE); BUCK, Michael, 49401 Damme (DE); SOARES, Jorge, 49393 Lohne (DE); LESON, Christoph, 49393 Lohne (DE); BERDING, Christian, 49393 Lohne (DE)
(74) Vertreter: dompatent von Kreisler Selting Werner - Partnerschaft von Patent- und Rechtsanwälten mbB

(56) Entgegenhaltungen:
- WO-A1-2021/074456
- CN-U- 212 461 824
- DE-A1- 102012 005 871
- DE-A1- 102019 212 861
- DE-A1- 102020 107 366
- GB-A- 2 549 512

## Beschreibung

Die vorliegende Erfindung betrifft eine Mehrkanaltemperiervorrichtung mit mindestens einem Temperierkörper, ein Batteriegehäuse sowie die Verwendung einer Mehrkanaltemperiervorrichtung.

Für die Lebensdauer und Leistungsabgabe sowie für die Sicherheit von Akkumulatoren bzw. wiederaufladbaren Batterien ist die Temperatur der Akkumulatoren während der Leistungsaufnahme und -abgabe von essenzieller Bedeutung. Aus dem Stand der Technik sind bereits Vorrichtungen und Verfahren zur aktiven Temperierung von Akkumulatoren bzw. Batteriezellen bekannt geworden. Die bekannten Konzepte lassen sich in grundlegend zwei unterschiedliche Bereiche aufteilen, nämlich die konvektive Temperierung und die konduktive Temperierung der Batteriezellen.

Bei der konduktiven Kühlung wird insbesondere bei Temperierkissen mindestens ein Temperierkanal ausgebildet, welcher mit einem Temperiermedium durchströmt wird. Der mindestens eine Temperierkanal liegt dabei wärmeleitend an dem mindestens einem zu temperierenden Objekt, wie beispielsweise einem Akkumulator, an. Durch die Wahl der Temperatur des Temperiermediums und der Durchströmungsgeschwindigkeit des Mediums durch den mindestens einen Temperierkanal kann das zu temperierende Objekt auf eine gewünschte Temperatur gebracht werden. Es kann folglich eine aktive Kühlung oder Erhitzung vorgesehen werden.

Grundvoraussetzung für alle konduktiven Temperiervorrichtungen einschließlich Temperierkissen ist es, dass diese zwingend fluiddicht ausgeführt werden müssen, um einen Kühlmittelaustritt während der gesamten Lebensdauer gewährleisten zu können. Im Stand der Technik werden im Bereich der Batterietechnik, beispielsweise im Elektromobilitätsbereich, eine Vielzahl von Batterieeinzelzellen zu einer großen Batteriezellenanordnung beispielsweise in einem Batteriegehäuse verbunden bzw. verschaltet. In diesen Batteriegehäusen muss zur Realisierung einer aktiven und möglichst gleichmäßigen Temperierung der Vielzahl der Batteriezellen ebenso eine Mehrzahl von Temperierkanälen der Temperierkissen ausgebildet werden. Die Einzeltemperierkanäle verlaufen dabei zwischen, auf oder unter den Reihen der Einzelbatteriezellen. Nachteilig an den Temperierkissen aus dem Stand der Technik, wie diese beispielsweise aus der DE 10 2019 212861 A1, GB 2 549 512 A, WO 2012/074456 A1 bekannt geworden sind ist, dass die einzelnen Temperierkanäle zu einem gesamtem Temperierkissen fluidtechnisch verbunden werden müssen. Hierbei muss an jeder Verbindungsstelle unbedingt die Dichtigkeit gewährleistet werden, hieraus resultiert die Notwendigkeit von verlässlichen fluiddichten Kanalverbindern, welche viele Dichtungselemente erfordern.

Aus der DE 10 2020 107366 A1, DE 10 2012 005871 A1, CN 212 461 824 U, sind bereits Mehrkanaltemperiervorrichtungen bekannt geworden, welche ein Mehrzahl von Strömungskanälen, sowie mindestens einen Rücklaufsammelkanal und/oder mindestens einen Verteilerkanal umfassen.

Ausgehend von den zuvor aufgeführten Nachteilen der Temperierkissen aus dem Stand der Technik stellt sich die vorliegende Erfindung die Aufgabe, eine Mehrkanaltemperiervorrichtung für die konduktive Kühlung zur Verfügung zu stellen, welches über eine vereinfachte Struktur unter Reduktion der benötigten Einzelbauteile verfügt und welches über ein vereinfachtes Fertigungsverfahren unter Reduktion der Anzahl der Fertigungsschritte herstellbar ist.

Die Aufgabe wird erfindungsgemäß gelöst durch eine Mehrkanaltemperiervorrichtung gemäß Anspruch 1 sowie durch ein Batteriegehäuse zur Aufnahme zumindest einer Batteriezelle umfassend eine Mehrkanaltemperiervorrichtung gemäß Anspruch 16 sowie die Verwendung einer erfindungsgemäßen Mehrkanaltemperiervorrichtung gemäß Anspruch 17.

Die erfindungsgemäße Mehrkanaltemperiervorrichtung umfasst zumindest einen Temperierkörper. Der Temperierkörper weist wiederum mindestens zwei Strömungskanäle jeweils mit einem Kanalquerschnitt zur Durchströmung mit einem Temperiermittel entlang eines Strömungsverlaufs von einem Kanaleintritt zu einem Kanalaustritt auf. Die erfindungsgemäße Mehrkanal-temperiervorrichtung weist weiterhin mindestens einen Verteilerkanal zur Zufuhr des Temperiermittels zu mindestens zwei Kanaleintritten und mindestens einen Rücklaufsammelkanal zur Abführung des Temperiermittels aus mindestens zwei Kanalaustritten auf. Erfindungsgemäß ist es vorgesehen, dass mindestens zwei Strömungskanäle materialschlüssig oder adhäsiv mit mindestens einem Verteilerkanal und/oder mit mindestens einem Rücklaufsammelkanal verbunden sind und/oder dass mindestens zwei Strömungskanäle zumindest über einen Teil des Umfangs des Kanalquerschnitts einstückig mit mindestens einem Verteilerkanal und/oder mit mindestens einem Rücklaufsammelkanal ausgebildet sind. Der erfindungsgemäße Temperierkörper ist aus mindestens zwei Lagen eines Flachbahnmaterials ausgebildet.

Der Temperierkörper der erfindungsgemäßen Mehrkanaltemperiervorrichtung ist zur konduktiven Temperierung mindestens eines zu temperierenden Objektes ausgestaltet, wobei mindestens eine zu temperierende Oberfläche bzw. mindestens ein zu temperierender Teiloberflächenbereich des zu temperierenden Objekts wärmeleitend mit zumindest einem Teilbereich oder ggf. mehreren Teilbereichen des Strömungskanals in Verbindung steht. Es kann beispielsweise ein Teiloberflächenbereich der Wandung des Strömungskanals unmittelbar an eine zu temperierende Oberfläche bzw. an mehrere zu temperierende Teiloberflächen des zu temperierenden Objekts beispielsweise der Mehrzahl der zu temperierenden Objekten anliegend ausgebildet werden. Erfindungsgemäß können zwischen der Oberfläche des zu temperierenden Objekts und der Wandung des mindestens einen Strömungskanals auch weitere die Wärmeleitung verbessernde Körper angeordnet oder Massen eingebracht werden.

Erfindungsgemäß sollen die gegenüber der Umgebung fluiddicht begrenzten Strömungskanäle derart verstanden werden, dass in dem jeweiligen Strömungskanal über den Kanaleintritt ein Temperiermittel zugeführt werden kann, welches entlang eines Verlaufspfades oder Verlaufsweges des Strömungskanals entlang des Strömungsverlaufes zu dem Kanalaustritt geführt wird. Ein Fluidaustausch zwischen dem Innenraum des jeweiligen Strömungskanals und dem restlichen Temperierkreislauf findet nur über den Kanaleintritt und den Kanalaustritt statt.

Die erfindungsgemäße Mehrkanaltemperiervorrichtung kann bevorzugt für die Temperierung einer Batteriezellanordnung bzw. einer Hochvoltbatterie eines elektrisch angetriebenen Fahrzeugs vorgesehen werden, wobei die erfindungsgemäße Mehrkanaltemperiervorrichtung zur aktiven Temperierung innerhalb eines Batteriegehäuses, in welchem eine Vielzahl von Batteriezellen bzw. Batterieeinzelzellen in einer Batteriezellanordnung angeordnet sind, vorgesehen werden kann.

Der Strömungskanal kann aus einem flexiblen Material ausgebildet werden. Die Ausgestaltung des Strömungskanals aus einem flexiblen Material bietet den Vorteil, dass sich der eigentliche Strömungskanal bestmöglich an die Oberfläche eines konduktiv zu kühlenden Objektes anlehnen bzw. anpassen und dabei dem ggf. unebenen Oberflächenverlauf des zu kühlenden Objektes folgen kann. Durch die Vorsehung des flexiblen Materials kann folglich die wärmeübertragende Kontaktfläche zwischen dem Strömungskanal und einer Oberfläche des zu kühlenden Objektes vergrößert und der Wärmeaustausch verbessert werden. Erfindungsgemäß können die mechanischen Materialeigenschaften des den Strömungskanal und/oder den Verteilerkanal und/oder den Rücklaufsammelkanal bildenden Materialen so gewählt werden, dass beispielweise eine dauerhafte Elastizität der Kanäle vorliegt, so dass sich die Kanäle flexibel und elastisch verformen können. Erfindungsgemäß kann es jedoch auch vorgesehen werden, dass die Elastizität und Biegesteifigkeit so gewählt wird, dass sich die Kanäle während der üblichen Betriebszustände und der resultierenden Kräfte nicht verformen können und eine starre Kanalgeometrie vorgesehen ist.

Erfindungsgemäß kann eine Mehrzahl von Strömungskanälen vorgesehen werden, welche fluidtechnisch parallelgeschaltet werden. Die fluidtechnische Parallelschaltung bedeutet, dass die Strömungskanäle gemeinsam von mindestens einem Zulauf gespeist und gleichzeitig mit einem Fluid durchströmt werden.

Die Länge des Strömungsverlaufes des jeweiligen Strömungskanals kann erfindungsgemäß ein, bevorzugt ein Vielfaches, des Umfangs des jeweiligen Kanalquerschnitts des Strömungskanals betragen. Die Strömungskanäle können erfindungsgemäß bevorzugt im Wesentlichen parallel zueinander verlaufend ausgestaltet werden.

Die erfindungsgemäße Mehrkanaltemperiervorrichtung kann beispielsweise über ein Verfahren hergestellt werden, welches die folgenden Schritte umfasst:
1. Aufeinanderlegen von mindestens zwei Lagen eines Flachbahnmaterials oder Bereitstellen einer einzigen Flachbahnmateriallage und Umlegen bzw. Umfalten der Flachbahnmateriallage zur Ausbildung von zwei aufeinanderliegenden Lagen eines Flachbahnmaterials;
2. teilweises Verbinden der mindestens zwei Lagen oder der mindestens einen gefalteten Lage des Flachbahnmaterials in zumindest Teilbereichen der Flachbahnmaterial-Lagen zur Ausbildung der gegenüber der Umgebung fluiddicht begrenzten mindestens zwei Strömungskanäle sowie des mindestens einen Verteilerkanals und Rücklaufsammelkanals.

Die teilweise bzw. abschnittsweise Verbindung zwischen den mindestens zwei Lagen des Flachbahnmaterials kann erfindungsgemäß beispielsweise durch lokales thermisches Fügen, Ultraschallschweißen, Verkleben oder alternative Verbindungsverfahren zur Herstellung einer dauerhaften fluiddichten Verbindung erfolgen.

Erfindungsgemäß kann es vorgesehen werden, dass zumindest Teilbereiche des Flachbahnmaterials ausgestanzt bzw. ausgeschnitten werden.

Weiterhin kann es während des Herstellungsverfahrens vorgesehen werden, dass das Flachbahnmaterial bzw. die darin gebildeten Kanäle mit Druck beaufschlagt werden zur temporären oder dauerhaften Ausbildung der Kanalquerschnitte. Die Materialeigenschaften des Flachbahnmaterials können erfindungsgemäß so gewählt werden, dass initial im Rahmen der Fertigung ein gewünschter Kanalquerschnitt definiert wird, beispielsweise unter Aufbringung eines Drucks höher als der hydrostatische Druck bei dem Durchströmen der Kanäle während des Betriebs der Temperiervorrichtung auf die Strömungskanäle und unter plastischer Verformung des Flachbahnmaterials.

Gemäß einem alternativen Herstellungsverfahren kann es jedoch erfindungsgemäß auch vorgesehen werden, dass die erfindungsgemäße Mehrkanaltemperiervorrichtung zumindest in Teilbereichen über ein Tauchformverfahren hergestellt wird.

Bevorzugt weisen die über das Tauchformverfahren hergestellten Bereiche zumindest die Hälfte der Gesamtfläche der Lage des Flachbahnmaterials auf.

Bei dem zu temperierenden Objekt kann es sich insbesondere um eine Batteriezelle und/oder um elektronische Komponenten, wie beispielsweise eine Leistungselektronik oder ähnliche Strukturen, handeln.

Als Temperiermedium kann bevorzugt ein flüssiges Medium, wie beispielsweise Wasser, ein mehrwertiger Alkohol, Glykol, ein Öl oder bevorzugt ein Wärmeträgeröl bzw. ein Gemisch aus den vorbezeichneten Medien genutzt werden. Erfindungsgemäß kann es jedoch ebenfalls vorgesehen werden, dass als Temperiermedium ein gasförmiges Medium, wie beispielsweise auch Luft, verwendet werden kann.

Erfindungsgemäß ist es vorgesehen, dass der Temperierkörper aus mindestens zwei Lagen eines Flachbahnmaterials ausgebildet wird, wobei bevorzugt die Lagen in Teilbereichen miteinander verbunden sind, zur Ausbildung der Mehrzahl an gegenüber der Umgebung fluiddicht begrenzten Strömungskanälen und/oder zur Ausbildung des mindestens einen Verteilerkanals und/oder des mindestens einen Rücklaufsammelkanals.

Erfindungsgemäß können die mindestens zwei Lagen des Flachbahnmaterials aus einer einzigen oder mehreren Lagen eines Flachbahnmaterials gebildet werden, welche mindestens in einem Teilbereich umgelegt bzw. gefaltet wird, bevorzugt zur Ausbildung von mindestens zwei flächenmäßig zumindest teilweise aufeinander aufliegenden bzw. parallel zueinander verlaufenden Lagen des Flachbahnmaterials. Die Ausbildung des Temperierkörpers aus mindestens zwei Lagen oder alternativ einer umgefalteten Lage eines Flachbahnmaterials weist den Vorteil auf, dass auch komplexe Geometrieverläufe des Temperierkörpers unter gleichzeitiger Ausbildung beispielsweise einer Vielzahl von Strömungskanälen, Verteilerkanälen und Rücklaufsammelkanälen unter Verwendung eines kontinuierlichen Flachbahnmaterials realisiert werden können. Eine separate Abdichtung der Vielzahl der Strömungskanäle gegenüber dem mindestens einen Rücklaufsammelkanal und/oder gegenüber dem Verteilerkanal kann dabei aufgrund der Nutzung des kontinuierlichen Flachbahnmaterials vermieden werden.

Erfindungsgemäß kann es weiterhin alternativ vorgesehen werden, dass der Temperierkörper zumindest anteilig über ein Tauchformverfahren als Tauchformkörper hergestellt ist, zur Ausbildung der Mehrzahl an gegenüber der Umgebung fluiddicht begrenzten Strömungskanälen und/oder des mindestens einen Verteilerkanals und/oder des mindestens einen Rücklaufsammelkanals.

Die Lagen des Flachbahnmaterials oder des Tauchformkörpers können dabei in Teilbereichen miteinander verbunden werden zur Ausbildung der Mehrzahl an Strömungskanälen sowie des mindestens einen Verteilerkanals und/oder des Rücklaufsammelkanals. Durch die Bildung des mindestens einen Verteilerkanals und/oder des mindestens einen Rücklaufsammelkanals über das Flachbahnmaterial oder über den Tauchformkörper weist wiederum den Vorteil auf, dass sowohl die Strömungskanäle und der mindestens eine Verteilerkanal und/oder der mindestens eine Rücklaufsammelkanal kontinuierlich aus dem gleichen Ausgangsmaterial des Flachbahnmaterials oder einstückig als Tauchformkörper ausgebildet werden können und damit können erfindungsgemäß Verbindungen bzw. Schnittstellen zwischen dem mindestens einen Verteilerkanal und den Strömungskanälen vermieden werden.

Der Temperierkörper kann mindestens einen Verteilerkanal sowie weiterhin mindestens einen Temperiermitteleinlass umfassen, wobei der mindestens eine Verteilerkanal jeweils oder gemeinsam mit dem mindestens einen Temperiermitteleinlass strömungsverbunden ist.

Der Temperierkörper kann mindestens einen Rücklaufsammelkanal sowie mindestens einen Temperiermittelauslass umfassen, wobei der mindestens eine Rücklaufsammelkanal jeweils oder gemeinsam mit dem mindestens einen Auslass strömungsverbunden ist.

Erfindungsgemäß kann es vorgesehen sein, dass die Materialeigenschaften des Flachbahnmaterials, insbesondere die Flexibilität, die Biegesteifigkeit und/oder die Elastizität des Flachbahnmaterials oder des Tauchformmaterials, so ausgewählt werden, dass sich der Kanalquerschnitt des jeweiligen Strömungskanals erst bei Durchströmung mit dem Temperiermittel aufgrund des hydrostatischen Innendrucks ausbildet, wobei sich bevorzugt der jeweilige Strömungskanal an die Oberfläche von mindestens eines aufgenommenen zu temperierenden Objektes anlegt.

Die Strömungskanäle können quer zu dem Strömungsverlauf beabstandet zueinander ausgeführt werden, zur Ausbildung mindestens eines Aufnahmeraums für die Anordnung mindestens eines konduktiv zu temperierenden Objekts zwischen den Strömungskanälen.

Die Abstände zwischen den Strömungskanälen können erfindungsgemäß quer zu dem Strömungsverlauf, bevorzugt orthogonal zu dem Strömungsverlauf, ausgebildet werden.

Weiterhin kann es vorgesehen werden, dass die Strömungskanäle zur Anpassung an die zu temperierenden Objekte verdrehbar und/oder tordierbar ausgestaltet sind und die Strömungskanäle zwischen mehreren zu temperierenden Objekten um 90° +/- 10° um den Strömungsverlauf des jeweiligen Strömungskanals verdreht bzw. tordiert einsetzbar sind.

Die Materialeigenschaften, insbesondere die Elastizität des die Strömungskanäle bildenden Flachmaterials oder Tauchformmaterials, können dabei derart gewählt werden, dass die Strömungskanäle dauerhaft elastisch verformbar sind, zur Anpassung des Kanalquerschnitts und des Strömungsverlaufs des mindestens einen zu temperierenden Objekts.

Der Kanalquerschnitt der mindestens zwei Strömungskanäle weist in einer ersten Ebene quer zu dem Strömungsverlauf eine Kanalbreite und in einer zweiten Ebene orthogonal zu der ersten Ebene eine Kanalhöhe auf. Bevorzugt kann die Strömungskanalbreite durch Zusammenführen in der ersten Ebene gegenüberliegender Oberflächen des Strömungskanals reduziert werden auf die Abmessungen eines Spaltes bzw. Abstandes zwischen zwei aufzunehmenden zu temperierenden Objekten bei resultierender zunehmender Kanalhöhe.

Zudem kann es vorgesehen werden, dass mindestens eine der Lagen des Flachmaterials in Teilbereichen der die jeweiligen Lagen bildenden Gesamtfläche unterschiedliche Materialdicken des Flachbahnmaterials umfasst. Durch die Vorsehung von unterschiedlichen Dicken können Teilbereiche des durch das Flachbahnmaterial gebildeten Temperierkörpers gezielt mit unterschiedlichen Materialeigenschaften, beispielsweise mit einer höheren Biegesteifigkeit, Elastizität oder auch Abriebsfestigkeit, ausgestattet werden. Auch können für die unterschiedlichen Kanäle, wie Strömungskanäle, Verteilerkanäle oder Rücklaufkanäle etc., unterschiedliche Materialwandstärken vorgesehen werden.

Die mindestens eine Lage des Flachbahnmaterials kann zumindest in Teilbereichen der die jeweilige Lage gebildeten Gesamtfläche aus einem einstückigen Flachbahnmaterial gebildet werden. Die einstückige Ausführung weist den Vorteil auf, dass der durch das einstückige Flachbahnmaterial gebildete Temperierkörper und insbesondere dessen Wandung aus einem kontinuierlichen Material ausgebildet sind, welche keine gesonderten Abdichtungsmaßnahmen innerhalb der einstückigen Flachbahnmaterialfläche erfordert.

Alternativ ist es erfindungsgemäß jedoch auch möglich, die mindestens eine Lage des Flachbahnmaterials zumindest in Teilbereichen der die jeweiligen Lage bildenden Gesamtfläche aus mehreren miteinander materialschlüssig oder kohäsiv verbundenen Teilabschnitten auszubilden.

Die Teilabschnitte können dabei beispielsweise unterschiedliche Materialdicken bzw. generell unterschiedliche Materialeigenschaften, wie beispielsweise eine unterschiedliche Elastizität oder Biegesteifigkeit, aufweisen.

Bevorzugt können die Teilflächenabschnitte zur Ausbildung der Gesamtlage des Flachbahnmaterials durch überlappende Verbindungen miteinander verbunden werden. Beispielsweise können die Teilflächenabschnitte durch thermische Fügeverfahren, durch Ultraschallschweißverfahren oder durch Klebeverfahren miteinander verbunden werden.

Die Breite und Länge des das Mehrkanaltemperiervorrichtung bildenden Flächengebildes beträgt bevorzugt mehr als das Einhundertfache der Dicke der beiden aufeinanderliegenden Flächengebilde.

Die Materialdicke des die jeweilige Lage bildenden Flachbahnmaterials kann kleiner als 1 mm, vorzugsweise kleiner als 0,2 mm, gewählt werden.

Weiterhin kann es vorgesehen werden, dass die mindestens eine Lage des Flachbahnmaterials zumindest in Teilbereichen der die jeweilige Lage bildenden Gesamtfläche einen zusätzlichen Materialauftrag, beispielsweise in Form einer zusätzlichen Materiallage, aufweist. Durch die Aufbringung der zusätzlichen Materiallage können beispielsweise Teilbereiche des Temperierkörpers verstärkt werden.

Erfindungsgemäß kann es vorgesehen werden, dass eine lokale Aufbringung einer anteiligen zusätzlichen Materiallage beispielsweise durch Verkleben, Verschweißen etc. oder Aufbringen mittels eines additiven Materialauftragsverfahrens, zum Beispiel Auftragsschweißen, erfolgt. Erfindungsgemäß können lokal Verstärkungsfasern, zum Beispiel Glasfasern, Kevlarfasern oder Keramikfasern, aufgebracht und mit dem Flachbahnmaterial oder dem Tauchformmaterial lasttragend verbunden werden.

Bevorzugt kann die zusätzliche Materiallage an der fluidabgewandten Seite des Flachbahnmaterials ausgestaltet werden.

Zwischen zwei benachbarten Strömungskanälen kann erfindungsgemäß jeweils ein Aufnahmeraum zur Aufnahme mindestens eines zu temperierenden Objekts ausgestaltet werden, wobei die zwei benachbarten Strömungskanäle zur Anlage an zwei gegenüberliegenden Oberflächen des mindestens einen zu temperierenden Objektes oder zur Anlage an wenigstens zwei gegenüberliegenden Oberflächen einer Anordnung mehrerer zu temperierender Objekte ausgebildet sind.

Erfindungsgemäß kann der mindestens eine Aufnahmeraum zur Anordnung einer Mehrzahl von zu temperierender Objekte ausgebildet werden, wobei sich der jeweilige Aufnahmeraum im Wesentlichen entlang des Strömungsverlaufes der Strömungskanäle erstreckt.

Gemäß einem weiteren Aspekt betrifft die vorliegende Erfindung ein Batteriegehäuse zur Aufnahme zumindest einer Batteriezelle umfassend eine Mehrkanaltemperiervorrichtung gemäß dem ersten Aspekt der Erfindung zur Temperierung der zumindest einen, in dem Batteriegehäuse aufgenommenen, Batteriezelle.

Gemäß einem dritten Aspekt betrifft die vorliegende Erfindung die Verwendung einer Mehrkanaltemperiervorrichtung gemäß dem ersten Aspekt der Erfindung zur Temperierung von elektrischen Komponenten, wie beispielsweise elektrischer Energiespeicher und/oder elektrischer Schaltungen bzw. Schaltungskomponenten.

Weiterhin kann die erfindungsgemäße Mehrkanaltemperiervorrichtung für die Temperierung elektrischer Energiespeicher in Form von Rundzellen, quaderförmiger prismatischer Zellen oder flacher, taschenförmiger Batteriezellen verwendet werden, wobei zumindest ein Strömungskanal an zumindest einem Teilbereich einer Außenwandung des zu temperierenden Energiespeichers zum Anliegen gebracht wird.

Weiterhin kann es vorgesehen werden, das erfindungsgemäße Mehrkanaltemperierkissen zur Temperierung von Energiespeichern einer stationären Anwendung oder eines Kraftfahrzeugs, eines Luftfahrzeugs oder eines Schiffes zu verwenden.

Nachfolgend werden unter Bezugnahme auf die beigefügten Figuren beispielhafte Ausführungen der erfindungsgemäßen Gegenstände erläutert.

Es zeigen:
- Fig. 1: eine schematische perspektivische Ansicht einer ersten Ausführungsform einer erfindungsgemäßen Mehrkanaltemperiervorrichtung;
- Fig. 2A: die Aufsicht auf die beispielhafte Ausführungsform der erfindungsgemäßen Mehrkanaltemperiervorrichtung gemäß Fig. 1 im Ausgangszustand während der Fertigung;
- Fig. 2B: einen Detailausschnitt aus der Mehrkanaltemperiervorrichtung gemäß Fig. 2A;
- Fig. 2C: eine Detailschnittansicht von Teilmerkmalen der Mehrkanaltemperiervorrichtung gemäß Fig. 2A und 2B;
- Fig. 3A: eine perspektivische Ansicht einer zweiten beispielhaften Ausführungsform einer erfindungsgemäßen Mehrkanaltemperiervorrichtung;
- Fig. 3B: eine perspektivische Detailschnittansicht der Anbindung eines Strömungskanals in der Ausführungsform der Mehrkanaltemperiervorrichtung gemäß Fig. 3A;
- Fig. 4A: eine perspektivische Ansicht einer weiteren beispielhaften Ausführungsform einer erfindungsgemäßen Mehrkanaltemperiervorrichtung; sowie
- Fig. 4B: eine perspektivische Detailschnittansicht der Anbindung eines Strömungskanals in der Ausführungsform der Mehrkanaltemperiervorrichtung gemäß Fig. 4A.

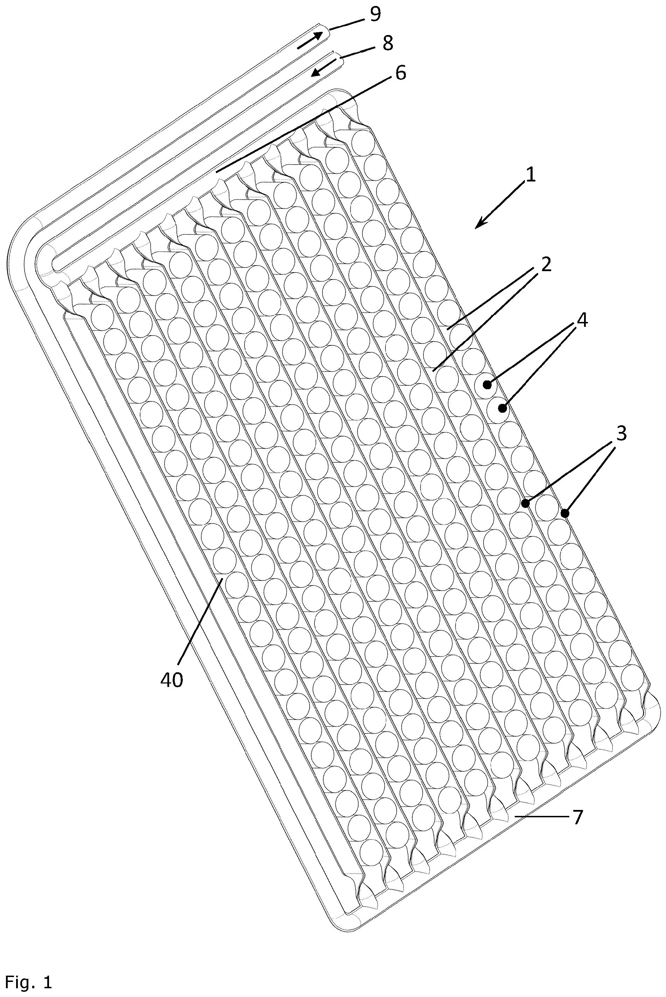

Die Fig. 1 zeigt eine erste perspektivische Ansicht einer erfindungsgemäßen Mehrkanaltemperiervorrichtung mit einem Temperierkörper 1. In Fig. 1 ist ein Temperierkörper 1 mit einer beispielhaften Anzahl von 12 parallel zueinander verlaufenden Strömungskanälen 3 dargestellt, erfindungsgemäß können selbstverständlich auch andere Anzahlen von Strömungskanälen vorgesehen werden. Die Strömungskanäle 3 sind dabei in der dargestellten beispielhaften Ausführungsform gemäß Fig. 1 flachbandförmig ausgestaltet zur Ausbildung der Anzahl von 11 parallel zueinander verlaufenden Aufnahmeräumen 2. Gemäß Fig. 1 sind in jedem der 11 dargestellten Aufnahmeräume jeweils 23 zylindrische Batteriezellen als Beispiel eines zu temperierenden Objektes 4 dargestellt. Erfindungsgemäß können selbstverständlich auch prismatische oder andersartig geformte Zellen in den Aufnahmeräumen angeordnet sein.

Wie dies ebenfalls der Fig. 1 entnehmbar ist, liegen Teilbereiche der Oberflächen der Strömungskanäle 3 an Teilbereichen der Oberfläche 40 der zu temperierenden Objekte 4 an, um eine konduktive Temperierung zwischen den Strömungskanälen 3 und den zu temperierenden Objekten 4 zu realisieren.

Die Mehrkanaltemperiervorrichtung 1 in der dargestellten Ausführungsform gemäß Fig. 1 verfügt weiterhin über einen Verteilerkanal 6 zur Speisung der Kanaleintritte 31 der Strömungskanäle 3. Weiterhin ist in der Ausführungsform gemäß Fig. 1 ein Rücklaufsammelkanal 7 zur Ableitung des Temperiermittels von den Kanalaustritten 33 der Strömungskanäle 3 ausgebildet. In der dargestellten Ausführungsform verbindet der Verteilerkanal 6 fluidtechnisch den Temperiermitteleinlass 8 mit den Kanaleintritten 31. Ebenso verbindet der Rücklaufsammelkanal 7 die Kanalaustritte 33 fluidtechnisch mit dem Temperiermittelauslass 9. Erfindungsgemäß können jedoch auch mehrere Verteilerkanäle 6 und/oder Rücklaufsammelkanäle 7 vorgesehen werden, wobei die Kanäle 6, 7 auch lediglich einen Teil der Strömungskanäle mit dem Einlass 8 oder dem Auslass 9 verbinden können. In Fig. 1 ist, wie vorangehend beschrieben und wie durch die Strömungsrichtungspfeile dargestellt, der Verteilerkanal 6 mit dem Temperiermitteleinlass 8 verbunden und der Rücklaufsammelkanal 7 mit dem Temperiermittelauslass 9. Selbstverständlich ließe sich der Rücklaufsammelkanal 7 auch mit dem Temperiermitteleinlass 8 des Temperiermittelkreislaufs der Anwendung verbinden und der Verteilerkanal 6 mit dem Temperiermittelauslass, so dass der Rücklaufsammelkanal zum Verteilerkanal wird und der Verteilerkanal zum Rücklaufsammelkanal wird, ohne dass die Mehrkanaltemperiervorrichtung hierzu strukturell geändert werden müsste.

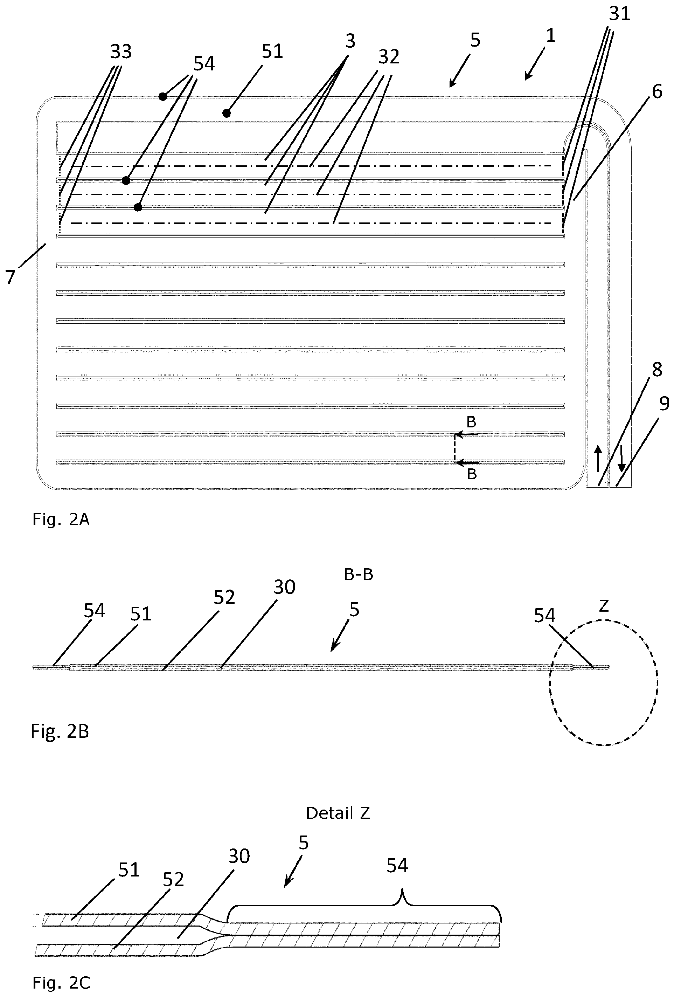

Die Fig. 2A zeigt die Aufsicht auf die Mehrkanaltemperiervorrichtung gemäß Fig. 1, wobei die Vorrichtung in der Fig. 2A im nicht expandierten Zustand während der Fertigung dargestellt ist. Die Mehrkanaltemperiervorrichtung umfasst einen Temperierkörper 1, welcher in der dargestellten Ausführungsform gemäß den Figuren 2 aus zwei Lagen 51, 52 eines oder mehrerer Flachbahnmaterialien 5 ausgebildet ist, wobei die Lagen 51, 52 in der dargestellten Ausführungsform aufeinanderliegend dargestellt sind und lediglich in Teilbereichen 54 miteinander verbunden sind, zur Ausbildung einer Mehrzahl an gegenüber der Umgebung fluiddicht begrenzten Strömungskanälen 3 sowie zur Ausbildung des wenigstens einen fluiddichten Verteilerkanals 8 und des wenigstens einen fluiddichten Rücklaufsammelkanals 9. Die beiden Lagen 51, 52 des Flachbahnmaterials 5 bilden somit während der Fertigung der Mehrkanaltemperiervorrichtung in Form eines Temperierkissens zunächst einen flachen Körper, welcher sich entlang einer Flächenebene erstreckt. Durch Druckbeaufschlagung nimmt das Temperierkissen dann eine gewünschte dreidimensionale Struktur an.

In der dargestellten Ausführungsform gemäß Fig. 2A weist das Beispiel des Temperierkörpers 1 die Anzahl von wiederum 12 Strömungskanälen 3 auf, wobei zur besseren Darstellbarkeit lediglich die Anzahl von drei Strömungskanälen mit dem Bezugszeichen 3 beziffert sind.

Die Aufsicht gemäß Fig. 2A zeigt die Mehrkanaltemperiervorrichtung mit dem Temperierkörper 1 in einem Zustand unmittelbar nach der Fertigung, nachdem die Kanalquerschnitte 30 noch nicht ausgebildet bzw. expandiert wurden. Erfindungsgemäß kann es vorgesehen sein, die Strömungsquerschnitte 30 unter Aufbringung bzw. Einbringung mit dem Temperiermittel unter Nutzung des hydrostatischen Innendrucks des Temperiermittels bei Durchströmung des Temperierkörpers 1 auszubilden, bei Verwendung eines Materials, vorzugsweise eines Flachbahnmaterials, wie beispielsweise einer Folie aus einem polymeren oder metallischen Material oder aus einer Kombination aus beidem, welches sich unter den von innen wirkenden hydrostatischen Temperiermittelkräften so weit verformt, bis zumindest Teilbereiche der Außenoberfläche der Strömungskanäle 3 auf die zu temperierenden Oberflächen bzw. Objekte 4 treffen.

In einer weiteren bevorzugten alternativen Variante bei Verwendung eines plastisch verformbaren Materials vorzugsweise mit blechartigen bzw. plattenartigen Eigenschaften vorzugsweise aus einem polymeren oder/und metallischen Werkstoff kann der Druck zur Ausbildung der Kanalquerschnitte 30 in einem zusätzlichen Fertigungsschritt durch plastische Verformung der zwei Lagen 51, 52 über innere und/oder äußere Kräfte erzeugt werden, vorzugsweise über einen hydrostatischen Innendruck und/oder ein Vakuum von außen.

Sinngemäß erfolgt die Ausbildung der Strömungsquerschnitte 30 für die Ausführungsformen nach Fign. 1, 3 und 4 auf gleiche Weise, wobei für die Ausführungen nach Figuren 1, 3 und 4 zusätzlich ein formgebender oder verformender Vorgang, wie vorangehend und nachfolgend beschrieben, erfolgt, um die Ausrichtung der Strömungskanäle 3 der Ausrichtung der zu temperierenden Oberflächen bzw. Objekten 4 anzupassen.

Wie dies in der Fig. 2A schematisch dargestellt ist, verlaufen die Strömungskanäle 3 jeweils entlang eines Strömungsverlaufes 32 von einem Kanaleintritt 31 zu einem entlang des Strömungsverlaufs 32 gegenüberliegenden Kanalaustritt 33. Die Strömungskanäle 3 sind dabei, wie dies aus der Fig. 2A bzw. auch in Zusammenschau mit der Fig. 1 ersichtlich ist, quer zu dem Strömungsverlauf 32 beabstandet zueinander ausgeführt zur Ausbildung mindestens eines Aufnahmeraums 2 für die Anordnung mindestens eines konduktiv zu temperierenden Objektes 4 zwischen den Strömungskanälen 3

In der dargestellten Ausführungsform gemäß Fig. 2 werden zwischen den vorgesehenen Strömungskanälen 3 elf Aufnahmeräume 2 ausgebildet, so wie diese beispielsweise in der Fig. 1 mit aufgenommenen zu temperierenden Objekten 4 dargestellt sind. Erfindungsgemäß kann es vorgesehen sein, dass die Strömungskanäle 3 die zu temperierenden Objekte 4 an zwei gegenüberliegenden Flächenbereichen 40 der Objekte kontaktieren, um einen verbesserten konduktiven Temperaturaustausch zu bewirken.

Ebenfalls aus der Fig. 2A ist ersichtlich, dass die Kanaleintritte 31 über einen Verteilerkanal 6 mit dem Temperiermitteleinlass 8 strömungsverbunden sind. Der Verteilerkanal 6 dient dabei zur Speisung der Kanaleintritte 31 mit Temperiermittel. Die Lagen 51, 52 des Flachbahnmaterials 5 sind dabei wiederum in Teilbereichen 54 des Flachbahnmaterials 5 derart miteinander verbunden, dass die Mehrzahl der Strömungskanäle 3 als auch der Verteilerkanal 6 ausgebildet wird. Weiterhin umfasst der dargestellte Temperierkörper einen Rücklaufsammelkanal 7, welcher zur Ableitung der Kanalaustritte 33 gebildet ist, und welcher die Kanalaustritte 33 mit dem ebenfalls vorgesehenen Temperiermittel-Auslass 9 fluidtechnisch verbindet. Der Rücklaufsammelkanal ist ebenfalls durch teilweise Verbindung der Lagen 51, 52 in Teilbereichen 54 des Flachbahnmaterials 5 ausgebildet.

Die Fig. 2B zeigt eine teilweise Schnittansicht durch einen Strömungskanal 3 gemäß der in Fig. 2A dargestellten Schnittlinie B-B. Aus der Fig. 2B ist erkennbar, dass der Temperierkörper 1 aus im Wesentlichen zwei aufeinanderliegenden Lagen 51, 52 eines Flachbahnmaterials 5 gebildet ist, welche in Teilbereichen 54 miteinander verbunden sind zur Ausbildung eines Kanalquerschnittes 30 zwischen den unverbundenen Anteilen der Lagen 51, 52, worin das vorgesehene Temperiermittel strömen kann. Die Ausgestaltung des dargestellten Kanalquerschnitts 30 des Strömungskanals 3 kann in analoger Weise für den Verteilerkanal 6 und/oder den Rücklaufsammelkanal 7 vorgesehen werden.

Wie bereits zuvor ausgeführt, stellt die Figur 2A die Mehrkanaltemperiervorrichtung bzw. den entsprechenden Temperierkörper 1 unmittelbar nach der Fertigung im noch flachliegenden ebenen Zustand dar. Durch Druckbeaufschlagung oder Durchströmung mit dem Temperiermittel bildet sich der Temperierkörper 1 dreidimensional aus, beispielsweise zur Ausbildung einer dreidimensionalen Form, wie diese in der Fig. 1 bzw. den Figuren 3 oder 4 dargestellt sind. Wobei für die Figuren 1, 3, und 4 zusätzlich ein formgebender oder verformender Vorgang, wie nachfolgend beschrieben, erfolgt, um die Ausrichtung der Strömungskanäle 3 der Ausrichtung der zu temperierenden Oberflächen bzw. Objekten 4 anzupassen.

Die Fig. 2C zeigt die vergrößerte Detailansicht des in Fig. 2B umkreisten Bereiches Z und zeigt die Gestaltung der im Wesentlichen parallel zueinander angeordneten Lagen 51, 52 des Flachbahnmaterials 5 sowie deren teilweise Verbindung im Bereich 54 zur Ausbildung eines Kanalquerschnitts 30 in einem Bereich, worin die beiden Lagen 51, 52 nicht miteinander verbunden sind.

In der Fig. 2B und 2C sind die beiden Lagen 51, 52 im nicht verbundenen Bereich zueinander beabstandet dargestellt. Diese Darstellung vereinfacht die Unterscheidung des verbundenen Bereichs 54 vom nicht verbundenen Bereich. Im Zustand nach der Herstellung des Temperierkörpers 1 können die beiden Lagen 51, 52 auch ohne Abstand aufeinander liegen, sofern in bevorzugter Ausführung, wie vorangehend beschrieben, ein flexibles Material verwendet ist. Die Fig. 2B und 2C zeigen folglich auch bereits eine beispielhafte Ausbildung des Kanalquerschnitts 30 während des bestimmungsgemäßen Betriebs mit der hydrostatischen Innendruckbeaufschlagung über das Temperiermittel. In diesem Zustand verhält sich der Temperierkörper 1 zumindest im Bereich der Strömungskanäle wie ein spaltfüllendes, toleranzausgleichendes Kissen.

Zusammenfassend stellen die Fign. 2 einerseits den Zustand der Mehrkanaltemperiervorrichtung bzw. des Temperierkörpers 1 nach der Herstellung und damit auch den Ausgangszustand aller Fign. 1, 2, 3 und 4 dar, andererseits stellen die Fign. 2 auch eine eigenständige Ausführungsform des Temperierkörpers 1 dar, bei dem die Strömungskanäle 3 in der gleichen Ebene liegen wie der gesamte Temperierkörper 1 oder zumindest parallel zur Ebene des gesamten Temperierkörpers 1 verlaufen. Diese Ausführungsform ist besonders bevorzugt zum Temperieren eines einzelnen großen Objekts 4 oder zum Temperieren mehrerer Objekte 4, die ohne oder in nur geringem Abstand zueinander gruppiert angeordnet sind und im Wesentlichen eine große gemeinsame Oberfläche zum Temperieren bieten. Das Aufteilen des gesamten Tempiermittelvolumenstroms in mehrere parallelgeschaltete Temperiermittelvolumenströme hat den Vorteil, dass das zu tempierende Objekt bzw. die zu temperierenden Objekte gleichmäßiger temperiert werden können und/oder einzelne Oberflächenbereiche über die Einstellung des Temperiermitteldurchsatzes je Strömungskanal bedarfsgerechter temperiert werden können. Zudem bietet die Aufteilung des gesamten Temperiermitteldurchsatzes die Möglichkeit und den Vorteil, die hydrostatischen Kräfte, die auf die Strömungskanäle 3 und die Oberflächen, die mit den Strömungskanälen in Kontakt stehen, wirken, bei gleichbleibendem hydrostatischen Druck zu reduzieren. Diese Vorteile bieten sinngemäß auch die Ausführungsformen nach Fign. 1, 3 und 4.

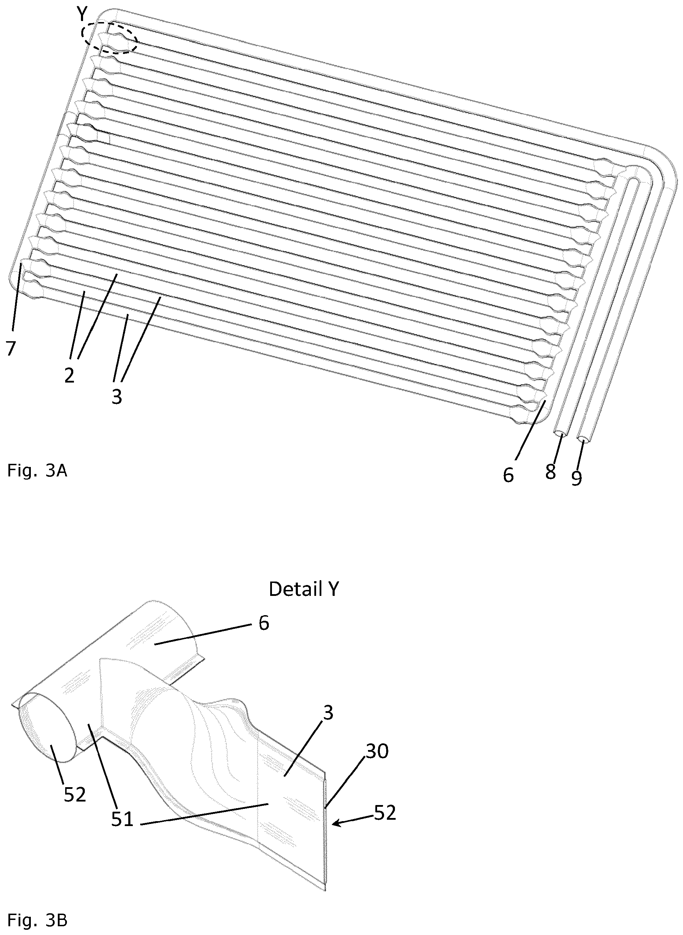

Die Fig. 3A zeigt eine alternative Ausführungsform eines Temperierkörpers 1, wobei die Strömungskanäle 3 zur Anpassung an die zu temperierenden Objekte 4 verdrehbar bzw. tordierbar ausgestaltet sind und die Strömungskanäle 3 zwischen mehreren zu temperierenden Objekten um 90° um den Strömungsverlauf 32 des jeweiligen Strömungskanals 3 verdreht bzw. tordiert sind.

Die Torsion des Strömungskanals 3 lässt sich dabei aus der Detailansicht Y in Fig. 3B des in Fig. 3A umkreisten Bereiches Y insbesondere gegenüber dem dargestellten beispielhaften Verteilerkanal 6 entnehmen.

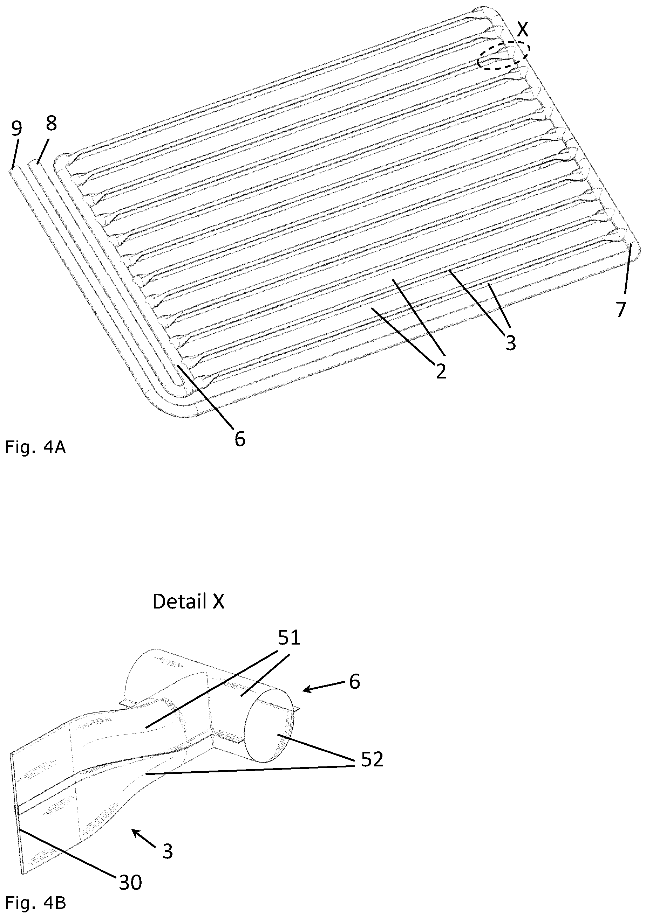

Die Figuren 4A und 4B zeigen eine weitere alternative beispielhafte Ausführungsform eines erfindungsgemäßen Temperierkörpers 1, wobei die Temperierkanäle 3 derart elastisch bzw. flexibel ausgestaltet sind, dass diese zur Ausbildung des gewünschten Strömungsquerschnitts 30 entsprechend des jeweiligen Spaltverlaufs zwischen den im Wesentlichen parallel angeordneten Zellen bzw. parallelen Zellreihen-Anordnungen verformbar sind, wobei der Spaltverlauf aufgrund der elastischen bzw. flexiblen Eigenschaften des Flachbahnmaterials vorzugsweise bei Verwendung von zylindrischen Zellen zur Erhöhung der Packungsdichte wellenförmig sein kann. Diese Ausbildung des Strömungskanals entsprechend des Spaltverlaufs gilt sinngemäß auch für die Ausführung nach Figuren 3. Die Fig. 4B stellt dabei wiederum die vergrößerte Detailansicht X des in Fig. 4A umkreisten Bereiches X dar.

Die Ausführungsformen nach Fig. 3 und 4 sind besonders bevorzugt zur seitlichen Temperierung von z.B. mehreren länglichen, prismatischen Zellen, deren Längenausdehnung ein Vielfaches der Breite und Höhe beträgt und diese parallel zueinander beabstandet angeordnet sind oder zur seitlichen Temperierung von kleineren Zellen, z.B. Rundzellen, von denen mehrere zu mehreren parallel angeordneten Reihen gruppiert sind. Dadurch, dass die Ebenen der Strömungskanäle im Bereich der zu temperierenden Objekte etwa im 90°-Winkel zur Temperierkörper-Ebene verlaufen, d.h. dass im Fall eines horizontal bzw. flachkant ausgerichteten Temperierkörpers innerhalb des Temperierkörpers die Strömungskanäle zumindest im Bereich der zu temperierenden Objekte vertikal bzw. hochkant verlaufen, entstehen vorteilhafterweise größere Abstände zwischen den Strömungskanälen, wodurch folglich größere Aufnahmeräume 2 für die zu temperierende Objekte entstehen.

Der wesentliche Unterschied der Ausführung nach den Figuren 4 zu den Figuren 3 ist, dass die vertikale bzw. hochkante Ausrichtung der Strömungskanäle 3 nicht durch Verdrehung oder Torsion erzielt wird, sondern durch die Verschiebung der verbundenen, sich gegenüberliegenden, Teilbereiche 54 je Strömungskanal aufeinander zu bis auf einen Abstand, so dass die Strömungskanalbreite der Breite des Spalts zwischen den Zellen bzw. Zellanordnungen entspricht bzw. der wenigstens eine Aufnahmeraum 2 zwischen zwei Strömungskanälen zur Aufnahme der Zellen bzw. Zellanordnung ausgebildet ist. Bei diesem Vorgang werden die aufeinanderliegenden Einzellagen 51, 52 ggf. durch eine zusätzliche Innendruckbeaufschlagung voneinander wegbewegt, bis sich dadurch die vertikale bzw. hochkante Ausrichtung der Strömungskanäle ergibt. Vereinfacht formuliert wird in den Figuren 4 das Breitenmaß der Strömungskanäle zusammengedrückt, wodurch die obere Lage nach oben ausweicht und die untere Lage nach unten ausweicht, wodurch einerseits ein größerer Aufnahmeraum entsteht und andererseits große seitliche Kontaktflächen zur Temperierung der Zellen ausgebildet werden.

## Patentansprüche

1. Mehrkanaltemperiervorrichtung mit mindestens einem Temperierkörper (1), umfassend:
mindestens zwei Strömungskanäle (3), jeweils mit einem Kanalquerschnitt (30) zur Durchströmung mit einem Temperiermittel entlang eines Strömungsverlaufes (32) von einem Kanaleintritt (31) zu einem Kanalaustritt (33),
mindestens einen Verteilerkanal (6) zur Zufuhr des Temperiermittels zu mindestens zwei Kanaleintritten (31), und
mindestens einen Rücklaufsammelkanal (7) zur Abführung des Temperiermittels aus mindestens zwei Kanalaustritten (33);
wobei mindestens zwei Strömungskanäle (3) materialschlüssig oder adhäsiv mit mindestens einem Verteilerkanal (6) und/oder mit mindestens einem Rücklaufsammelkanal (7) verbunden sind, **dadurch gekennzeichnet, dass**
die mindestens zwei Strömungskanäle (3) zumindest über einen Teil des Umfangs des Kanalquerschnitts (30) einstückig mit mindestens einem Verteilerkanal (6) und/oder mit mindestens einem Rücklaufsammelkanal (7) ausgebildet sind; und
dass der Temperierkörper (1) aus mindestens zwei Lagen eines Flachbahnmaterials ausgebildet ist.

2. Mehrkanaltemperiervorrichtung nach Anspruch 1, wobei der Temperierkörper (1) zumindest anteilig aus mindestens zwei Lagen (51, 52) eines einteilig oder mehrteilig ausgeführten Flachbahnmaterials (5) ausgebildet ist, und wobei die Lagen (51, 52) in Teilbereichen (54) miteinander verbunden sind zur Ausbildung der Mehrzahl an gegenüber der Umgebung fluiddicht begrenzten Strömungskanälen (3) und/oder zur Ausbildung des mindestens einen Verteilerkanals (6) und/oder zur Ausbildung des mindestens einen Rücklaufsammelkanals (7).

3. Mehrkanaltemperiervorrichtung nach Anspruch 1, wobei der Temperierkörper (1) zumindest anteilig aus mindestens zwei Lagen (51, 52) ausgebildet ist, wobei die mindestens zwei Lagen (51, 52) durch Falten einer Lage eines Flachbahnmaterials (5) gebildet sind, und wobei die Lagen (51, 52) in Teilbereichen (54) miteinander verbundenen sind zur Ausbildung der Mehrzahl an gegenüber der Umgebung fluiddicht begrenzten Strömungskanälen (3) und/oder wenigstens einem Verteilerkanal (6) und/oder wenigstens einem Rücklaufsammelkanal (7) ausgebildet ist.

4. Mehrkanaltemperiervorrichtung nach einem der Ansprüche 1 bis 3, wobei der Temperierkörper (1) zumindest anteilig über ein Tauchformverfahren als Tauchformkörper hergestellt ist, zur Ausbildung der Mehrzahl an gegenüber der Umgebung fluiddicht begrenzten Strömungskanälen (3) und/oder des mindestens einen Verteilerkanals (6) und/oder des mindestens einen Rücklaufsammelkanals (7).

5. Mehrkanaltemperiervorrichtung nach einem der vorausgehenden Ansprüche, wobei der Temperierkörper (1) mindestens einen Verteilerkanal (6) sowie weiterhin mindestens einen Temperiermitteleinlass (8) umfasst, wobei der mindestens eine Verteilerkanal (6) jeweils oder gemeinsam mit dem mindestens einen Temperiermitteleinlass (8) strömungsverbunden ist, und/oder
wobei der Temperierkörper (1) mindestens einen Rücklaufsammelkanal (7) sowie mindestens einen Temperiermittelauslass (9) umfasst, wobei der mindestens eine Rücklaufsammelkanal (7) jeweils oder gemeinsam mit dem mindestens einem Temperiermittelauslass (9) strömungsverbunden ist.

6. Mehrkanaltemperiervorrichtung nach einem der vorausgehenden Ansprüche, wobei die Flexibilität und/oder die Biegesteifigkeit und/oder die Elastizität des Flachbahnmaterials (5) oder des Tauchformkörpermaterials so ausgewählt ist, dass sich der Kanalquerschnitt (30) des jeweiligen Strömungskanals (3) erst bei Durchströmung mit dem Temperiermittel aufgrund des hydrostatischen Innendrucks ausbildet, wobei sich bevorzugt der jeweilige Strömungskanal (3) an die Oberfläche (40) von mindestens eines aufgenommenen zu temperierenden Objektes (4) anlegt oder sich zumindest an wenigstens eine wärmeleitfähige Oberfläche anlegt, die wärmeleitend mit dem wenigstens einen zu temperierenden Objekt (4) verbunden ist.

7. Mehrkanaltemperiervorrichtung nach einem der vorausgehenden Ansprüche, wobei die Strömungskanäle (3) in einer ersten Ebene quer zu dem Strömungsverlauf (32) beabstandet zueinander ausgeführt sind zur Ausbildung mindestens eines Aufnahmeraums (2) für die Anordnung mindestens eines konduktiv zu temperierenden Objektes (4) zwischen den Strömungskanälen (3).

8. Mehrkanaltemperiervorrichtung nach einem der vorausgehenden Ansprüche, wobei die Strömungskanäle (3) zur Anpassung an die zu temperierenden Objekte (4) verdrehbar und/oder tordierbar ausgestaltet sind und die Strömungskanäle (3) zwischen mehreren zu temperierenden Objekten (4) um 90°±10° um den Strömungsverlauf (32) des jeweiligen Strömungskanals (3) verdreht bzw. tordiert eingesetzt sind;
oder wobei der Kanalquerschnitt (30) der mindestens zwei Strömungskanäle (3) in einer ersten Ebene quer zu dem Strömungsverlauf (32) eine Kanalbreite und in einer zweiten Ebene orthogonal zu der ersten Ebene eine Kanalhöhe aufweist, wobei die Strömungskanalbreite durch Zusammenführen in der ersten Ebene gegenüberliegender Oberflächen des Strömungskanals (3) reduziert ist auf die Abmessungen eines Spaltes bzw. Abstandes zwischen zwei aufzunehmenden zu temperierenden Objekten (4) bei resultierender zunehmender Kanalhöhe.

9. Mehrkanaltemperiervorrichtung nach einem der vorausgehenden Ansprüche, wobei die Elastizität des die Strömungskanäle (3) bildenden Flachbahnmaterials (5) oder des Tauchformkörpermaterials derart gewählt ist, dass die Strömungskanäle (3) elastisch verformbar sind zur Anpassung des Kanalquerschnitts (30) und des Strömungsverlaufes (32) an das mindestens eine zu temperierende Objekt (4).

10. Mehrkanaltemperiervorrichtung nach einem der vorausgehenden Ansprüche, wobei mindestens eine Lage (51, 52) des Flachbahnmaterials (5) in Teilbereichen der die jeweilige Lage (51, 52) bildenden Gesamtfläche unterschiedliche Materialdicken des Flachbahnmaterials (5) umfasst.

11. Mehrkanaltemperiervorrichtung nach einem der vorausgehenden Ansprüche, wobei mindestens eine Lage (51, 52) des Flachbahnmaterials (5) zumindest in Teilbereichen der die jeweilige Lage bildenden Gesamtfläche aus einem einstückigen Flachbahnmaterial (5) gebildet sind, oder
wobei mindestens eine Lage (51, 52) des Flachbahnmaterials (5) zumindest in Teilbereichen der die jeweilige Lage bildenden Gesamtfläche aus mehreren miteinander verbundenen Teilabschnitten gebildet ist.

12. Mehrkanaltemperiervorrichtung nach einem der vorausgehenden Ansprüche, wobei mindestens eine Lage (51, 52) des Flachbahnmaterials (5) zumindest in Teilbereichen der die jeweilige Lage (51, 52) bildenden Gesamtfläche einen zusätzlichen Materialauftrag, beispielsweise in Form einer zusätzlichen Materiallage, aufweist.

13. Mehrkanaltemperiervorrichtung nach einem der vorausgehenden Ansprüche, wobei zwischen zwei benachbarten Strömungskanälen (3) jeweils mindestens ein Aufnahmeraum (2) zur Aufnahme mindestens eines zu temperierenden Objekts (4) ausgebildet ist und wobei die zwei benachbarten Strömungskanäle (3) zur Anlage an zwei gegenüberliegenden Oberflächen (40) des mindestens einen zu temperierenden Objekts (4) oder zur Anlage an wenigstens zwei gegenüberliegenden Oberflächen (40) einer Anordnung mehrerer zu temperierenden Objekte (4) ausgebildet sind.

14. Mehrkanaltemperiervorrichtung nach einem der vorausgehenden Ansprüche, wobei der mindestens eine Aufnahmeraum (2) zur Anordnung einer Mehrzahl von zu temperierender Objekte (4) ausgebildet ist, wobei sich der jeweilige Aufnahmeraum (2) im Wesentlichen entlang des Strömungsverlaufes (32) der Strömungskanäle (3) erstreckt.

15. Batteriegehäuse zur Aufnahme zumindest einer Batteriezelle umfassend eine Mehrkanaltemperiervorrichtung gemäß einem der Ansprüche 1 bis 14, zur Temperierung der zumindest einen in dem Batteriegehäuse aufgenommenen Batteriezelle.

16. Verwendung einer Mehrkanaltemperiervorrichtung nach einem der Ansprüche 1 bis 14 zur Temperierung von elektrischen Komponenten, wie beispielsweise elektrischer Energiespeicher und/oder elektrischer Schaltungen.

17. Verwendung nach Anspruch 16, zur Temperierung elektrischer Energiespeicher in Form von Rundzellen, prismatischer Zellen oder flacher taschenförmiger Batteriezellen, wobei zumindest ein Strömungskanal (3) an zumindest einem Teilbereich einer Außenwandung des zu temperierenden Energiespeichers anliegt.

18. Verwendung nach Anspruch 16 oder 17 zur Temperierung von Energiespeichern einer stationären Anwendung oder eines Kraftfahrzeuges, eines Flugzeuges oder eines Schiffes.

## Claims

1. A multi-channel temperature control device with at least one temperature control body (1), comprising
at least two flow channels (3), each with a channel cross-section (30) for the flow of a temperature control medium along a flow path (32) from a channel inlet (31) to a channel outlet (33),
at least one distribution channel (6) for supplying the temperature control medium to the at least two channel inlets (31), and
at least one return collection channel (7) for discharging the temperature control medium from the at least two channel outlets (33);
wherein the at least two flow channels (3) are connected in a materially bonded or adhesive manner to the at least one distribution channel (6) and/or to the at least one return collection channel (7), **characterized in that**
the at least two flow channels (3) are integrally formed with the at least one distribution channel (6) and/or with the at least one return collection channel (7) across at least a part of the circumference of the channel cross-section (30); and
the temperature control body (1) is formed from at least two layers of a flat sheet material.

2. The multi-channel temperature control device according to claim 1, wherein the temperature control body (1) is formed at least in part from at least two layers (51, 52) of a one-piece or multi-piece flat sheet material (5), and wherein the layers (51, 52) are connected to each other in partial areas (54) to form the plurality of flow channels (3) which are bounded in a fluid-tight manner with respect to the environment and/or to form the at least one distribution channel (6) and/or to form the at least one return collection channel (7).

3. The multi-channel temperature control device according to claim 1, wherein the temperature control body (1) is formed at least in part from at least two layers (51, 52), wherein the at least two layers (51, 52) are formed by folding a layer of a flat sheet material (5), and wherein the layers (51, 52) are connected to each other in partial areas (54) in order to form the plurality of flow channels (3) which are bounded in a fluid-tight manner with respect to the environment and/or the at least one distribution channel (6) and/or the at least one return collection channel (7).

4. The multi-channel temperature control device according to any one of claims 1 to 3, wherein the temperature control body (1) is produced at least in part as a dip molding body by means of dip molding in order to form the plurality of flow channels (3) which are bounded in a fluid-tight manner with respect to the environment and/or the at least one distribution channel (6) and/or the at least one return collection channel (7).

5. The multi-channel temperature control device according to any one of the preceding claims, wherein the temperature control body (1) comprises at least one distribution channel (6) and also at least one temperature control medium inlet (8), wherein the at least one distribution channel (6) is respectively or jointly flow-connected with the at least one temperature control medium inlet (8), and/or
wherein the temperature control body (1) comprises at least one return collection channel (7) and at least one temperature control medium outlet (9), wherein the at least one return collection channel (7) is respectively or jointly flow-connected with the at least one temperature control medium outlet (9).

6. The multi-channel temperature control device according to any one of the preceding claims, wherein the flexibility and/or the bending stiffness and/or the elasticity of the flat sheet material (5) or the dip molding body material is selected such that the channel cross-section (30) of the respective flow channel (3) is formed only when the temperature control medium flows through it due to the hydrostatic internal pressure, wherein the respective flow channel (3) preferably contacts the surface (40) of at least one received object (4) to be temperature-controlled or at least contacts at least one thermally conductive surface which is connected in a thermally conductive manner to the at least one object (4) to be temperature-controlled.

7. The multi-channel temperature control device according to any one of the preceding claims, wherein the flow channels (3) are configured to be spaced apart from each other in a first plane transversely to the flow path (32) in order to form at least one receiving space (2) for the arrangement of at least one object (4) to be temperature-controlled by conduction between the flow channels (3).

8. The multi-channel temperature control device according to any one of the preceding claims, wherein the flow channels (3) are configured to be rotatable and/or twistable for adaptation to the objects (4) to be temperature-controlled and the flow channels (3) between several objects (4) to be temperature-controlled are inserted in a rotated and twisted manner, respectively, by 90°±10° about the flow path (32) of the respective flow channel (3);
or wherein the channel cross-section (30) of the at least two flow channels (3) has a channel width in a first plane transversely to the flow path (32) and a channel height in a second plane orthogonally to the first plane,
wherein the flow channel width is reduced to the dimensions of a gap or distance between two objects (4) to be received and temperature-controlled by merging opposite surfaces of the flow channel (3) in the first plane, with the resulting increase in channel height.

9. The multi-channel temperature control device according to any one of the preceding claims, wherein the elasticity of the flat sheet material (5) forming the flow channels (3) or of the dip molding body material is selected such that the flow channels (3) are elastically deformable for adapting the channel cross-section (30) and the flow path (32) to the at least one object (4) to be temperature-controlled.

10. The multi-channel temperature control device according to any one of the preceding claims, wherein at least one layer (51, 52) of the flat sheet material (5) has different material thicknesses of the flat sheet material (5) in partial areas of the total surface forming the respective layer (51, 52).

11. The multi-channel temperature control device according to any one of the preceding claims, wherein at least one layer (51, 52) of the flat sheet material (5) is formed, at least in partial areas of the total surface forming the respective layer, from a one-piece flat sheet material (5), or
wherein at least one layer (51, 52) of the flat sheet material (5) is formed, at least in partial areas of the total surface forming the respective layer, from several partial sections connected to each other.

12. The multi-channel temperature control device according to any one of the preceding claims, wherein at least one layer (51, 52) of the flat sheet material (5) has an additional material application, for example in the form of an additional material layer, at least in partial areas of the total surface forming the respective layer (51, 52).

13. The multi-channel temperature control device according to any one of the preceding claims, wherein respectively at least one receiving space (2) for receiving at least one object (4) to be temperature-controlled is formed between two adjacent flow channels (3), and wherein the two adjacent flow channels (3) are configured to contact two opposing surfaces (40) of the at least one object (4) to be temperature-controlled or to contact at least two opposing surfaces (40) of an arrangement of several objects (4) to be temperature-controlled.

14. The multi-channel temperature control device according to any one of the preceding claims, wherein the at least one receiving space (2) is formed for the arrangement of a plurality of objects (4) to be temperature-controlled, wherein the respective receiving space (2) extends substantially along the flow path (32) of the flow channels (3).

15. A battery housing for receiving at least one battery cell comprising a multi-channel temperature control device according to any one of claims 1 to 14 for temperature control of the at least one battery cell received in the battery housing.

16. Usage of a multi-channel temperature control device according to any one of claims 1 to 14 for the temperature control of electrical components, such as electrical energy storages and/or electrical circuits.

17. The usage according to claim 16 for the temperature control of electrical energy storages in the form of round cells, prismatic cells or flat, pouch-shaped battery cells, wherein at least one flow channel (3) contacts at least a partial area of an outer wall of the energy storage to be temperature-controlled.

18. The usage according to claim 16 or 17 for the temperature control of energy storages of a stationary application or a motor vehicle, an aircraft or a ship.

## Revendications

1. Dispositif de régulation de température multicanal ayant au moins un corps de régulation de température (1) comprenant :
au moins deux canaux d'écoulement (3), chacun ayant respectivement une section de canal (30) pour faire circuler un agent de régulation de température au travers le long d'un parcours d'écoulement (32) d'une entrée de canal (31) à une sortie de canal (33),
au moins un canal distributeur (6) pour amener l'agent de régulation de température vers au moins deux entrées de canal (31), et
au moins un canal de collecte de retour (7) pour évacuer l'agent de régulation de température par au moins deux sorties de canal (33) ;
dans lequel au moins deux canaux d'écoulement (3) sont reliés par complémentarité de matériau ou de manière adhésive à au moins un canal distributeur (6) et/ou à au moins un canal de collecte de retour (7), **caractérisé en ce que**
les aux moins deux canaux d'écoulement (3) sont formés au moins sur une partie du pourtour de la section de canal (30) d'un seul bloc avec au moins un canal distributeur (6) et/ou avec au moins un canal de collecte de retour (7) ; et
que le corps de régulation de température (1) est constitué d'au moins deux couches d'un matériau en lé plat.

2. Dispositif de régulation de température multicanal selon la revendication 1, dans lequel le corps de régulation de température (1) est constitué au moins proportionnellement d'au moins deux couches (51, 52) d'un matériau en lé plat conçu d'une seule partie ou de plusieurs parties, et dans lequel les couches (51, 52) sont reliées entre elles dans des zones partielles (54) pour former la pluralité de canaux d'écoulement (3) délimités en étanchéité fluidique par rapport à l'environnement et/ou pour former l'au moins un canal distributeur (6) et/ou pour former l'au moins un canal de collecte de retour (7).

3. Dispositif de régulation de température multicanal selon la revendication 1, dans lequel le corps de régulation de température (1) est constitué au moins proportionnellement d'au moins deux couches (51, 52), dans lequel les au moins deux couches (51, 52) sont formées par pliage d'une couche d'un matériau en lé plat (5), et dans lequel les couches (51, 52) sont reliées entre elles dans des zones partielles (54) pour former la pluralité de canaux d'écoulement (3) délimités en étanchéité fluidique par rapport à l'environnement et/ou au moins un canal distributeur (6) et/ou au moins un canal de collecte de retour (7).

4. Dispositif de régulation de température multicanal selon l'une des revendications 1 à 3, dans lequel le corps de régulation de température (1) est constitué au moins proportionnellement en tant que corps moulé par immersion par un procédé de moulage par immersion, pour former la pluralité de canaux d'écoulement (3) délimités en étanchéité fluidique par rapport à l'environnement et/ou au moins un canal distributeur (6) et/ou au moins un canal de collecte de retour (7).

5. Dispositif de régulation de température multicanal selon l'une des revendications précédentes, dans lequel le corps de régulation de température (1) comprend au moins un canal distributeur (6) ainsi qu'en outre au moins une admission d'agent de régulation de température (8), dans lequel l'au moins un canal distributeur (6) est relié en écoulement respectivement ou conjointement à l'au moins une admission d'agent de régulation de température (8), et/ou
dans lequel le corps de régulation de température (1) comprend au moins un canal de collecte de retour (7) ainsi qu'au moins une sortie d'agent de régulation de température (9), dans lequel l'au moins un canal de collecte de retour (7) est relié en écoulement respectivement ou conjointement à l'au moins une sortie d'agent de régulation de température (9).

6. Dispositif de régulation de température multicanal selon l'une des revendications précédentes, dans lequel la flexibilité et/ou la rigidité en flexion et/ou l'élasticité du matériau en lé plat (5) ou du matériau de corps moulé par immersion est ainsi sélectionnée que la section de canal (30) du canal d'écoulement (3) respectif se forme uniquement au passage de l'agent de régulation de température en raison de la pression interne hydrostatique, dans lequel de préférence le canal d'écoulement (3) respectif se pose sur la surface (40) d'au moins un objet (4) reçu à réguler en température ou se pose au moins sur au moins une surface conductrice de chaleur, qui est reliée en conductivité de chaleur avec l'au moins un objet (4) à réguler en température.

7. Dispositif de régulation de température multicanal selon l'une des revendications précédentes, dans lequel les canaux d'écoulement (3) sont conçus en étant distants l'un de l'autre transversalement au parcours d'écoulement (32) dans un premier plan pour former au moins un espace de réception (2) pour l'agencement d'au moins un objet (4) à réguler en température de manière conductive entre les canaux d'écoulement (3).

8. Dispositif de régulation de température multicanal selon l'une des revendications précédentes, dans lequel les canaux d'écoulement (3) sont conçus en pouvant être tournés et/ou tordus pour s'adapter aux objets (4) à réguler en température et les canaux d'écoulement (3) entre plusieurs objets (4) à réguler en température sont utilisés tournés respectivement tordus de 90°+- 10° autour du parcours d'écoulement (32) du canal d'écoulement (3) respectif ;
ou bien dans lequel la section de canal (30) des au moins deux canaux d'écoulement (3) présente une largeur de canal dans un premier plan transversal au parcours d'écoulement (32) et une hauteur de canal dans un second plan orthogonal au premier plan, dans lequel la largeur de canal d'écoulement est réduite, par réunion dans le premier plan de surfaces opposées du canal d'écoulement (3), aux dimensions d'une fente, respectivement d'une distance entre deux objets (4) à recevoir pour la régulation de température avec pour résultat une augmentation de la hauteur de canal.

9. Dispositif de régulation de température multicanal selon l'une des revendications précédentes, dans lequel l'élasticité du matériau en lé plat (5) formant les canaux d'écoulement (3) du matériau de corps formé par immersion est ainsi choisie que les canaux d'écoulement (3) sont déformables élastiquement pour l'adaptation de la section de canal (30) et du parcours d'écoulement (32) à l'au moins un objet (4) à réguler en température.

10. Dispositif de régulation de température multicanal selon l'une des revendications précédentes, dans lequel au moins une couche (51, 52) du matériau en lé plat (5) comprend différentes épaisseurs de matériau en lé plat (5) dans des zones partielles de la surface totale formant la couche respective (51, 52).

11. Dispositif de régulation de température multicanal selon l'une des revendications précédentes, dans lequel au moins une couche (51, 52) du matériau en lé plat (5) est formée d'un matériau en lé plat (5) d'un seul bloc au moins dans des zones partielles de la surface totale formant la couche respective, ou
dans lequel au moins une couche (51, 52) du matériau en lé plat (5) est formée de plusieurs tronçons partiels reliés entre eux au moins dans des zones partielles de la surface totale formant la couche respective.

12. Dispositif de régulation de température multicanal selon l'une des revendications précédentes, dans lequel au moins une couche (51, 52) du matériau en lé plat (5) présente un apport de matériau supplémentaire, par exemple sous forme d'une couche de matériau supplémentaire, au moins dans des zones partielles de la surface totale formant la couche respective (51, 52).

13. Dispositif de régulation de température multicanal selon l'une des revendications précédentes, dans lequel respectivement au moins un espace de réception (2) pour recevoir au moins un objet (4) à réguler en température est formé entre deux canaux d'écoulement (3) voisins, et dans lequel les deux canaux d'écoulement (3) voisins sont conçus pour s'appuyer sur deux surfaces (40) opposées de l'au moins un objet (4) à réguler en température ou pour s'appuyer sur au moins deux surfaces (40) opposées d'un agencement de plusieurs objets (4) à réguler en température.

14. Dispositif de régulation de température multicanal selon l'une des revendications précédentes, dans lequel l'au moins un espace de réception (2) est conçu pour agencer une pluralité d'objets (4) à réguler en température, dans lequel l'espace de réception (2) respectif s'étend essentiellement le long du parcours d'écoulement (32) des canaux d'écoulement (3).

15. Boîtier de batterie pour recevoir au moins une cellule de batterie comprenant un dispositif de régulation de température selon l'une des revendications 1 à 14, pour la régulation de température de l'au moins une cellule de batterie reçue dans le boîtier de batterie.

16. Utilisation d'un dispositif de régulation de température multicanal selon l'une des revendications 1 à 14 pour la régulation de température de composants électriques, comme des accumulateurs d'énergie électrique et/ou des branchements électriques.

17. Emploi selon la revendication 16, pour la régulation de température d'accumulateurs d'énergie électrique sous forme de cellules rondes, de cellules prismatiques ou de cellules de batterie plates en forme de poche, dans lequel au moins un canal d'écoulement (3) repose sur au moins une zone partielle d'une paroi extérieure de l'accumulateur d'énergie à réguler en température.

18. Emploi selon la revendication 16 ou 17 pour la régulation de température d'accumulateurs d'énergie d'une application stationnaire ou d'un véhicule, d'un avion ou d'un bateau.
